# EUROPÄISCHE PATENTSCHRIFT

(11) **EP 3 477 248 B1**
(45) Veröffentlichungstag und Bekanntmachung des Hinweises auf die Patenterteilung: **07.06.2023**
(21) Anmeldenummer: 17198575.7
(22) Anmeldetag: 26.10.2017
(51) Int. Cl.: G01B 11/24, G01B 11/04, H01F 41/02, B07C 5/10, G06T 7/00

(54) **INSPEKTIONSSYSTEM UND VERFAHREN ZUR FEHLERANALYSE**
INSPECTION SYSTEM AND METHOD OF ANALYZING FAULTS
SYSTÈME D'INSPECTION ET PROCÉDÉ D'ANALYSE D'ERREURS

(43) Veröffentlichungstag der Anmeldung: 01.05.2019
(73) Patentinhaber: Heinrich Georg GmbH Maschinenfabrik, 57223 Kreuztal (DE)
(72) Erfinder: Zeppenfeld, Arian, 57462 Olpe (DE); Klappert, Günter, 57223 Kreuztal (DE); Friedrich, Jost, 57271 Hilchenbach (DE); Loth, Volker, 57258 Freudenberg (DE)
(74) Vertreter: advotec.

(56) Entgegenhaltungen:
- CN-U- 206 013 644
- DE-A1- 3 400 981
- DE-B3-102015 203 221
- DE-U1-202013 105 825
- JP-A- S60 106 610
- JP-A- 2006 208 297
- US-A1- 2008 235 971
- US-A1- 2010 260 378

## Beschreibung

Die Erfindung betrifft ein Inspektionssystem und ein Verfahren zur Fehleranalyse von Transformatorblechen mit einem Inspektionssystem, wobei das Inspektionssystem eine Erfassungseinheit, eine Fördervorrichtung und eine Verarbeitungsvorrichtung umfasst, wobei die Erfassungseinheit eine optische Erfassungsvorrichtung aufweist, wobei mittels der Fördervorrichtung eine Anzahl von Transformatorblechen relativ zu der Erfassungsvorrichtung ununterbrochen bewegt wird, wobei die Erfassungsvorrichtung quer, vorzugsweise orthogonal zu einer Bewegungsrichtung eines Transformatorblechs angeordnet wird.

Im Transformatorenbau werden eine Qualität und ein Leistungsverlust eines Transformatorkerns, der aus Transformatorblechen zusammengesetzt ist, wesentlich von den Eigenschaften der Transformatorbleche beeinflusst. Insbesondere können sich durch eine abweichende geometrische Gestalt eines Transformatorblechs außerhalb einer Toleranz Spalte- und Winkelfehler bei dem Transformatorkern ergeben. Überdies kann ein Zusammenbau des Transformatorkerns erschwert sein. Es ist daher bekannt Transformatorbleche nach einem Schneiden aus einer Anlage zur Herstellung von Transformatorblechen zu entnehmen und auf einem externen Messplatz geometrisch zu vermessen. Mit den so gewonnenen Messergebnissen kann dann manuell über eine Anlagensteuerung der Anlage eine Anpassung von Anlagenparametern vorgenommen werden, um eine Korrektur von Blechabmessungen vorzunehmen. Nachteilig ist hier, dass die Anlage mehrfach angehalten werden muss, bis eine Gestalt der Transformatorbleche wieder in den geforderten Toleranzen liegt. Der Vorgang der Inspektion der Transformatorbleche und der Korrektur der Anlage ist daher sehr zeit- und damit auch kostenaufwendig. Darüber hinaus wird ein Messtisch benötigt, der in einer reinen Umgebung mit einer an die Anlage angepassten Temperatur aufgestellt und regelmäßig kalibriert werden muss. Auf dem Messtisch kann das Transformatorblech mit einer Kamera, die oberhalb des Transformatorblechs angeordnet ist, im Ganzen aufgenommen und mittels Bildverarbeitung anhand von Referenzpunkten Vermessen werden. Weiter ist eine Erfassung bzw. Messung eines Transformatorblechs mittels mehrerer Kameras bekannt. Die Kameras können bewegbar innerhalb eines festgelegten Koordinatensystems angeordnet sein. Auch ist es bekannt, Kanten eines Transformatorblechs mittels eines Lasersystems zu erfassen und zu vermessen. Vor einer Vermessung wird dann ein Laser so positioniert, dass dieser bereits im Bereich einer Kante des Transformatorblechs angeordnet ist, um eine Erfassung zu beschleunigen. Hier erfordert das Vermessen eines Transformatorblechs daher eine definierte Lage des Transformatorblechs.

Auch können oberhalb eines zu inspizierenden Transformatorblechs mehrere optische Erfassungsvorrichtungen einer Erfassungseinheit angeordnet sein, wobei das Transformatorblech dann relativ zu den optischen Erfassungsvorrichtungen bewegt werden kann. So kann ein Bauraum für das Inspektionssystem wesentlich verringert werden, da dann keine Bewegung der Erfassungseinheit bzw. der optischen Erfassungsvorrichtungen relativ zu einem unbewegten Transformatorblech mehr erforderlich ist. Die mit der optischen Erfassungsvorrichtung aufgenommenen Bilder des Transformatorblechs können mittels Bildverarbeitung anhand von Markierungen auf dem Transformatorblech zu einem Kombinationsbild des Transformatorblechs zusammengesetzt werden. Nachteilig ist hier, dass keine befriedigende Genauigkeit des Messergebnisses erzielt werden kann und eine Bewegungsgeschwindigkeit des Transformatorenblechs vergleichsweise gering ist. Beispielsweise kann eine Messgenauigkeit im Bereich < 1:10 000 einer Blechlänge bezogen auf je ein Meter Blechmittenlänge bei einer Blechgeschwindigkeit über 50 m/min erreicht werden. Da Transformatorenbleche Abmessungen im Bereich von mehreren Metern aufweisen können, ist es möglich durch ein verbessertes Inspektionsverfahren bereits erhebliche Kostenvorteile zu erzielen.

Die US 2010/260378 A1 offenbart eine Vorrichtung und ein Verfahren zur Erfassung der Gestalt eines sich bewegenden Objektes mit dieser Vorrichtung. Dabei erfasst eine Erfassungsvorrichtung ein Bild einer Kontur des von einer Fördervorrichtung relativ zu der Erfassungsvorrichtung bewegten Objektes, wobei eine Verarbeitungsvorrichtung die von der Erfassungsvorrichtung erfassten Bilder unter Berücksichtigung der Betriebsgeschwindigkeit der Fördervorrichtung, welche von einer Messvorrichtung gemessen wird, zu einem Kombinationsbild zusammensetzt.

Die JP 2006 208297 A1 zeigt eine Vorrichtung und ein Verfahren zur Messung einer ebenen Gestalt einer Stahlplatte mit dieser Vorrichtung. Dabei wird eine Stahlplatte auf einem Förderband bewegt. Eine Erfassungsvorrichtung erfasst die Breite und die Länge der Stahlplatte, wobei eine Verarbeitungsvorrichtung die von der Erfassungsvorrichtung erfasste Breiten- und Längeninformation zusammensetzt, so dass daraus die ebene Gestalt der Stahlplatte gewonnen werden kann.

Die JP S60 106610 A1 betrifft ein Verfahren zur Fehleranalyse von gewalztem Material, welches durch einen vorausgegangenen Walzprozess Wölbungen aufweisen kann. Ein durch einen Walzprozess gewonnenes Objekt bewegt sich dabei auf einer Fördervorrichtung. Eine über der Fördervorrichtung angebrachte Erfassungsvorrichtung erfasst dabei die Position von Kanten des Objektes. Außerdem misst eine Messvorrichtung die Betriebsgeschwindigkeit der Fördervorrichtung. Eine Verarbeitungsvorrichtung führt die von der Erfassungsvorrichtung und von der Messvorrichtung erfassten und gemessenen Informationen zusammen, sodass auf die Wölbung des Objektes geschlossen werden kann.

Die DE 10 2015 203 221 B3 betrifft ein Verfahren zur Korrektur eines vorgegebenen Schneidwegs zum Schneiden einer Blechplatine aus einem Blechband, wobei das Blechband kontinuierlich von einer Fördervorrichtung bewegt wird.

Der vorliegenden Erfindung liegt daher die Aufgabe zugrunde, ein Verfahren zur Fehleranalyse von Transformatorblechen mit einem Inspektionssystem sowie ein Inspektionssystem vorzuschlagen, mit dem eine genauere und kostengünstigere Inspektion von Transformatorblechen ermöglich wird.

Diese Aufgabe wird durch ein Verfahren mit den Merkmalen des Anspruchs 1 und ein Inspektionssystem mit den Merkmalen des Anspruchs 12 gelöst.

Bei dem erfindungsgemäßen Verfahren zur Fehleranalyse von Transformatorblechen mit einem Inspektionssystem umfasst das Inspektionssystem eine Erfassungseinheit, eine Fördervorrichtung und eine Verarbeitungsvorrichtung, wobei die Erfassungseinheit eine optische Erfassungsvorrichtung aufweist, wobei mittels der Fördervorrichtung eine Anzahl von Transformatorblechen relativ zu der Erfassungsvorrichtung ununterbrochen bewegt wird, wobei die Erfassungsvorrichtung quer, vorzugsweise orthogonal zu einer Bewegungsrichtung eines Transformatorblechs angeordnet wird, wobei mittels einer Messvorrichtung der Erfassungseinheit eine Bewegungsgeschwindigkeit eines Transformatorblechs relativ zu der Erfassungsvorrichtung gemessen wird, wobei ein Bild einer Kontur eines Transformatorblechs mit der Erfassungsvorrichtung erfasst wird, wobei mittels der Verarbeitungsvorrichtung Bilder eines Transformatorblechs unter Berücksichtigung der Bewegungsgeschwindigkeit des Transformatorblechs zu einem Kombinationsbild des Transformatorblechs zusammengesetzt werden, wobei mittels der Verarbeitungsvorrichtung aus dem Kombinationsbild eine Gestalt des Transformatorblechs bestimmt wird, wobei mittels eines Positionssensors und/oder Wegsensors der Messvorrichtung eine direkte Messung einer Position, einer Bewegungsstrecke und/oder der Bewegungsgeschwindigkeit des Transformatorblechs an dem Transformatorblech erfolgt, wobei die Verarbeitungsvorrichtung zur Ausbildung eines Transformatorkerns eine Legereihenfolge für eine Anzahl von Transformatorblechen anhand deren Gestalt bestimmt.

Mit dem erfindungsgemäßen Verfahren kann eine Qualität und Geschwindigkeit einer Inspektion eines Transformatorblechs wesentlich erhöht werden. Dies wird dadurch erreicht, dass eine Messvorrichtung vorgesehen ist, mit der die Bewegungsgeschwindigkeit des Transformatorblechs, welches von der optischen Erfassungsvorrichtung gerade erfasst wird, gemessen wird. Auch dadurch, dass zumindest eine Kontur des Transformatorblechs erfasst wird, kann die Gestalt des Transformatorblechs gemessen beziehungsweise bestimmt werden. Unter der Gestalt des Transformatorblechs wird hier eine zweidimensionale Erstreckung des Transformatorblechs beziehungsweise dessen Form verstanden. Dadurch, dass die Bewegungsgeschwindigkeit des Transformatorblechs während der Bildaufnahme gemessen wird, wird es möglich eine Mehrzahl von aufeinanderfolgenden Bildern des Transformatorblechs zu erfassen und dann mittels der Verarbeitungsvorrichtung beziehungsweise mittels Bildverarbeitung zu dem Kombinationsbild zusammenzusetzen. Die Verarbeitungsvorrichtung setzt dabei insbesondere die Bilder des Transformatorblechs in Abhängigkeit der Bewegungsgeschwindigkeit derart zusammen, dass ein reales Abbild des Transformatorblechs beziehungsweise dessen Kontur in der Verarbeitungsvorrichtung erhalten wird. Dieses Abbild des Transformatorblechs entspricht dann gleichzeitig einer Wiedergabe der Gestalt des Transformatorblechs.

Insgesamt kann die Bewegungsgeschwindigkeit des Transformatorblechs dann auch soweit gesteigert werden, dass diese eine Ausgabegeschwindigkeit einer Schneidvorrichtung einer Anlage zum Schneiden von Transformatorblechen entspricht. Auch kann durch die Einbeziehung der Bewegungsgeschwindigkeit eine höhere Messgenauigkeit erzielt werden. Beispielsweise kann bei einer Bewegungsgeschwindigkeit von über 200 m/min dann eine Maßtoleranz der Gestalt von < 1:70 000 der Blechlänge bezogen auf sieben Meter Blechmittenlänge genau bestimmt werden.

Dabei ist es zunächst unerheblich um welche Art einer optischen Erfassungsvorrichtung es sich handelt. Wesentlich ist, dass die optische Erfassungsvorrichtung quer zur Bewegungsrichtung des Transformatorblechs angeordnet ist. Die Bilder der Kontur können mittels Kontrasterkennung durch eine geeignete Lichtreflexion an Blechkanten des Transformatorblechs oder auch mit einem sogenannten Laserscanner zur Kantendetektion aufgenommen werden. Die optische Erfassungsvorrichtung überdeckt dabei zumindest das Transformatorblech bzw. eine Breite des Transformatorblechs, sodass eine Justierung von beispielsweise mehreren Kameras entfallen kann.

Erfindungsgemäß erfolgt mittels eines Positionssensors und/oder Wegsensors der Messvorrichtung eine direkte Messung einer Position, einer Bewegungsstrecke und/oder der Bewegungsgeschwindigkeit des Transformatorblechs an dem Transformatorblech. Je nach Ausbildung der Fördervorrichtung kann es bei einem auf Reibung basierenden Transportsystem zu einem Schlupf zwischen dem Transformatorblech und dem Transportsystem bei einer Messung der Bewegungsgeschwindigkeit kommen, woraus Messfehler resultieren können. Beispielsweise kann die Bewegungsgeschwindigkeit eines Förderbandes mittels eines Encoders bestimmt werden, der an einem Antrieb des Förderbandes angeordnet ist und ein Geschwindigkeitsprofil ermittelt. Darüber hinaus kann auch ein Oberflächensensor vorgesehen sein, über den eine Abnutzung eines Förderbandes, durch Vergleich eines Bildes der Oberfläche mit einem Referenzbild, fortwährend ermittelt wird, wodurch sich Rückschlüsse auf einen sich ändernden Reibungskoeffizienten zwischen dem Transformatorblech und der Oberfläche ziehen lassen. Der Positionssensor beziehungsweise der Wegsensor kann auch ein optischer oder ein mechanischer Sensor sein, mit dem die Bewegungsstrecke beziehungsweise die Bewegungsgeschwindigkeit der Transformatorbleche messbar ist. In einer besonders einfachen Ausführungsform kann der Positionssensor beziehungsweise der Wegsensor ein Rad umfassen, welches mit dem Transformatorblech kontaktiert werden kann, sodass eine Bewegung des Transformatorblechs unmittelbar auf das Rad übertragen wird. Weiter können mehrere Positionssensoren beziehungsweise Wegsensoren vorhanden sein, beispielsweise um einen Einlauf eines Transformatorblechs in das Inspektionssystem zu detektieren oder auch um eine Position eines vorderen und eines hinteren Endes des Transformatorblechs zu bestimmen. So kann dann bei einem Einlauf des Transformatorblechs beispielsweise ein Wegsensor nach der Erkennung des vorderen Endes des Transformatorblechs eingeschaltet und nach der Erkennung des hinteren Endes des Transformatorblechs ausgeschaltet werden.

Erfindungsgemäß bestimmt die Verarbeitungsvorrichtung zur Ausbildung eines Transformatorkerns eine Legereihenfolge für eine Anzahl von Transformatorblechen anhand deren Gestalt. Gemessene und dem Transformatorblech zugeordnete Werkstückdaten können von einer geeigneten Software genutzt werden, um eine Größe von Legespalte am Transformatorkern möglichst gering zu halten. Dadurch kann dann eine Verlustleistung des Transformatorkerns wesentlich reduziert werden. Folglich kann die Verarbeitungsvorrichtung an ein teil- oder vollautomatisches Kernstapelsystem einer Anlage angebunden sein. Wenn die jeweiligen Transformatorbleche gekennzeichnet sind, kann auch eine Herstellung der Transformatorbleche und ein Zusammensetzen der Transformatorbleche zu einem Transformatorkern in örtlich voneinander getrennten beziehungsweise voneinander unabhängigen Anlagen erfolgen. Wesentlich dabei ist, dass Werkstückdatensätze der Transformatorbleche an ein Stapelsystem weitergeleitet und zur Optimierung der Blechpositionierung an einer Ablagestelle des Transformatorblechs genutzt werden können.

Insbesondere kann ein Maß und/oder eine Kontur des Transformatorblechs mittels Bildverarbeitung aus dem Kombinationsbild bestimmt werden. Beispielsweise kann eine Länge und eine Breite des Transformatorblechs, Längen von einzelnen Kanten, Winkel, Durchmesser von Öffnungen, deren Abstände, eine Blechkrümmung, eine Lage von Öffnungen, eine Kantenqualität und/oder eine Schnittqualität gemessen beziehungsweise bestimmt werden. Beispielsweise kann mittels Bildverarbeitung aus Grauwerten des Bildes beziehungsweise durch deren Differenzierung eine hohe Genauigkeit bei der Erkennung von Blechkanten beziehungsweise der Kontur erreicht werden. Auch kann eine Stabilität des Transformatorblechs und Fehler in einer Oberfläche, wie Beschädigungen, Kratzer, Löcher, Kantenbrüche und so weiter, mit einer Messung beziehungsweise in einem einzelnen Messzyklus ermittelt und bestimmt werden.

Die Verarbeitungsvorrichtung kann das erfasste Bild und eine zu einem Erfassungszeitpunkt mittels der Messvorrichtung gemessene Position des Transformatorblechs in Bewegungsrichtung relativ zu der Erfassungsvorrichtung einander zuordnen. So kann dann ein Bilddatensatz des Bildes sowie ein Positionsdatensatz der gemessenen Position von der Verarbeitungsvorrichtung in Art einer Synchronisierung von Bildaufnahme, Bildaufnahmezeitpunkt und Blechgeschwindigkeit einander zugeordnet werden.

Die Verarbeitungsvorrichtung kann einen Bilddatensatz des Bildes und einen Messdatensatz der Position in einem Werkstückdatensatz des Transformatorblechs speichern. Der Werkstückdatensatz kann dann dem Transformatorblech, beispielsweise über einen Barcode oder ein Farbmuster eindeutig zugeordnet werden, sodass das Transformatorblech bereits durch die optische Erfassungsvorrichtung beziehungsweise die Verarbeitungsvorrichtung unmittelbar erkannt werden kann. Der Werkstückdatensatz kann auch zur Anbindung des Inspektionssystems an eine prozessspezifische Infrastruktur einer Anlage genutzt werden, wodurch Kosten bei der Qualitätssicherung und eventuellen nachfolgenden Arbeitsschritten zur Herstellung eines Transformatorkerns dadurch eingespart werden können, dass Werkstückdaten den jeweiligen Transformatorblechen zugeordnet werden können.

Weiter kann die Verarbeitungsvorrichtung dem Bilddatensatz des Bildes und dem Messdatensatz der Position einen übereinstimmenden Zeitstempel zuweisen. Durch den Zeitstempel wird eine exakte Zuordnung von einem Bild zu einem Erfassungszeitpunkt in Abhängigkeit der Bewegungsgeschwindigkeit des Transformatorblechs gewährleistet. Weiter kann vorgesehen sein eine mit einem Bild visualisierte Transformatorblechposition mit dem Zeitstempel zu markieren, um einen exakten Zeitpunkt eines Wechsels der Bewegungsgeschwindigkeit festzustellen und gegebenenfalls zu speichern.

Auch kann die Verarbeitungsvorrichtung aus dem Bilddatensatz des Bildes eine individuelle optische Kennzeichnung des Transformatorblechs erkennen und dem Werkstückdatensatz zuordnen. Die optische Kennzeichnung kann beispielsweise ein Barcode oder ein Farbmuster auf einer Oberfläche des Transformatorblechs sein. Alternativ kann vorgesehen sein, dass mittels einer Markiereinrichtung die optische Kennzeichnung auf das bereits vermessene Transformatorblech aufgebracht und dem Werkstückdatensatz nachfolgend der Fehleranalyse zugeordnet wird.

Die Verarbeitungsvorrichtung kann Messdaten von einem Positionssensor und/oder Wegsensor in der Bewegungsrichtung vor und nachfolgend von einem Positionssensor und/oder Wegsensor in der Bewegungsrichtung nach der Erfassungsvorrichtung verarbeiten. Somit muss das Transformatorblech nicht auf einer gesamten Länge einer durchgehenden Fördervorrichtung aufliegen, sondern kann in einem End- und Anfangsbereich des Transformatorblechs unterschiedliche Geschwindigkeit aufweisen, wenn der Positionssensor bzw. Wegsensor vor oder nach der Erfassungsvorrichtung nicht mit dem Transformatorblech in Eingriff ist beziehungsweise das Transformatorblech nicht detektieren kann. Ist der jeweilige Positionssensor bzw. Wegsensor vor und nach der Erfassungsvorrichtung weder mit dem Transformatorblech im Eingriff beziehungsweise detektiert das Transformatorblech, so kann entweder der Sensor vor oder der Sensor nach der Erfassungsvorrichtung als führender Sensor solange verwendet werden, bis dieser das Transformatorblech nicht mehr detektieren kann. Durch dieses Verfahren beziehungsweise durch die Anordnung der betreffenden Sensoren kann das Inspektionssystem direkt an einer Anlage zum Schneiden von Transformatorblechen angeordnet werden. Auch kann dann die Messvorrichtung bei einem Stoppen beziehungsweise Anhalten des Transformatorblechs, dadurch, dass sich noch ein Teil des Transformatorblechs in einem Schneidteil der Anlage befindet und noch bearbeitet wird, das Transformatorblech mittels des Positionssensors beziehungsweise Wegsensors bereits erfassen. Dadurch kann eine exakte Position eines bereits gemessenen Transformatorblechbereichs bei einem weiteren Vorschieben des Transformatorblechs für eine genaue Fortführung einer Messung verwendet werden. Auch ist ein Rückführen des Transformatorblechs während einer Messung in Folge unterschiedlicher Schnittprogramme der Anlage möglich, da dann die Verarbeitungsvorrichtung eine zuletzt gemessene Transformatorblechposition suchen und erkennen kann, ohne dass ein Messergebnis beeinflusst wäre.

Besonders vorteilhaft ist es, wenn eine Differenz einer an einem Ende des Transformatorblechs gemessenen Bewegungsgeschwindigkeit zu einer an einem gegenüberliegenden Ende des Transformatorblechs gemessenen Bewegungsgeschwindigkeit bei der Bestimmung der Gestalt von der Verarbeitungsvorrichtung, bevorzugt mit einem Zeitpunkt eines Wechsels der Bewegungsgeschwindigkeit, berücksichtigt wird. Dies kann dadurch ermöglicht werden, dass Positionssensoren und/oder Wegsensoren gleichzeitig Positions- beziehungsweise Wegdaten des Transformatorblechs erfassen, die dann synchron von der Verarbeitungsvorrichtung verarbeitet werden können. Diese Positions- beziehungsweise Wegdaten können von der Verarbeitungsvorrichtung so zusammengeführt werden, dass der genaue Zeitpunkt des Wechsels der Bewegungsgeschwindigkeit mit der zu dem Zeitpunkt maßgeblichen Position des Transformatorblechs bestimmt werden kann. Ein Wechsel einer Bewegungsgeschwindigkeit, beispielsweise in Folge einer Verwendung zweier voneinander getrennter Förderbänder, kann so ein Messergebnis nicht verfälschen. Insbesondere kann vorgesehen sein, einen Geschwindigkeitsabgleich in Bewegungsrichtung vor und nach der optischen Erfassungsvorrichtung vorzunehmen.

Um ein noch genaueres Messergebnis zu erhalten, kann eine Temperatur des Transformatorblechs und/oder der Fördervorrichtung gemessen und mit einem jeweiligen Ausdehnungskoeffizienten bei einer Bestimmung der Gestalt von der Verarbeitungsvorrichtung berücksichtigt werden. Beispielsweise kann ein Temperatursensor eine Temperatur eines einlaufenden Transformatorblechs ermitteln und diesen Temperaturwert an die Verarbeitungsvorrichtung weitergeben. Über den Temperaturwert des Transformatorblechs kann eine temperaturabhängige Änderung einer gemessenen Länge gegenüber einer Umgebungstemperatur im Messbereich oder einer voreingestellten Referenztemperatur, wie zum Beispiel eine Temperatur eines Prüfraums, erfolgen.

Eine Qualität eines Messergebnisses kann weiter verbessert werden, wenn eine Bandspannung und/oder ein Reibwert eines Förderbandes der Fördervorrichtung gemessen und bei einer Bestimmung der Gestalt von der Verarbeitungsvorrichtung berücksichtigt wird. Bei flexiblen Fördervorrichtungen wie Förderbändern kann mittels einer Spannvorrichtung eine Bandspannung erhöht oder reduziert werden, wobei die Bandspannung dann von der Verarbeitungsvorrichtung berücksichtigt werden kann. So kann sich aus einer veränderten Bandspannung ein veränderter Reibwert des Förderbandes ergeben, der zu einer Geschwindigkeitsdifferent zwischen dem Förderband und dem bewegten Transformatorblech führen kann. Auch kann ein Sensor vorgesehen sein, der einen Abstand eines sich längenden Förderbandes zu einem Referenzabstand misst, um so eine Bandspannung zu ermitteln.

Weiter kann vorgesehen sein, eine Kalibrierung des Inspektionssystems mittels einer Inspektion eines Transformatorblechs mit einer bekannten Gestalt durchzuführen. Dabei kann eine Referenzlänge eines Transformatorblechs mit genauen Blechlängen vor Inbetriebnahme des Inspektionssystems ermittelt und Umgebungsdaten, wie eine Temperatur, eine Bandspannung, ein Bandoberflächenzustand, ein Umgebungslicht und so weiter, als Kalibrierdaten in die Verarbeitungsvorrichtung eingegeben werden. Die Referenzlänge kann durch eine zusätzliche Bildaufnahme eines ruhenden Transformatorblechs, beispielsweise in vorgegebenen Zeitabständen, neu ermittelt und in die Verarbeitungsvorrichtung eingegeben werden. Dabei kann ein Transformatorblech hinsichtlich seiner Gestalt sehr genau ausgemessen werden, wobei eine Messgenauigkeit wesentlich genauer sein kann, wie eine Messgenauigkeit des Inspektionssystems. Besonders vorteilhaft ist es auch, wenn die optische Erfassungsvorrichtung einen geringeren Wärmeausdehnungskoeffizienten aufweist, als das zu vermessende Transformatorblech. Hierdurch können eventuelle Temperatureinflüsse auf ein Messergebnis weiter verringert werden. Auch können die bei der Kalibrierung verwendeten Werkstückdaten der bekannten Gestalt eines Transformatorblechs auch zur Kalibrierung einer Anlage zum Schneiden des Transformatorblechs genutzt werden.

Das erfindungsgemäße Inspektionssystem zur Fehleranalyse von transformatorblechen umfasst eine Erfassungseinheit, eine Fördervorrichtung und eine Verarbeitungsvorrichtung, wobei die Erfassungseinheit eine optische Erfassungsvorrichtung aufweist, wobei mittels der Fördervorrichtung eine Anzahl von Transformatorblechen relativ zu der Erfassungsvorrichtung ununterbrochen bewegbar ist, wobei die Erfassungsvorrichtung quer, vorzugsweise orthogonal zu einer Bewegungsrichtung eines Transformatorblechs angeordnet ist, wobei die Erfassungseinheit eine Messvorrichtung aufweist, mittels der eine Bewegungsgeschwindigkeit eines Transformatorblechs relativ zu der Erfassungsvorrichtung messbar ist, wobei ein Bild einer Kontur eines Transformatorblechs mit der Erfassungsvorrichtung erfassbar ist, wobei mittels der Verarbeitungsvorrichtung Bilder eines Transformatorblechs unter Berücksichtigung der Bewegungsgeschwindigkeit des Transformatorblechs zu einem Kombinationsbild des Transformatorblechs zusammensetzbar sind, wobei mittels der Verarbeitungsvorrichtung eine Gestalt des Transformatorblechs aus dem Kombinationsbild bestimmbar ist, wobei die Messvorrichtung einen Positionssensor und/oder Wegsensor zur direkten Messung einer Position, einer Bewegungsstrecke und/oder der Bewegungsgeschwindigkeit eines Transformatorblechs an dem Transformatorblech aufweist, wobei mittels der Verarbeitungsvorrichtung zur Ausbildung eines Transformatorkerns eine Legereihenfolge für eine Anzahl von Transformatorblechen anhand deren Gestalt bestimmbar ist.

Erfindungsgemäß weist die Messvorrichtung einen Positionssensor und/oder Wegsensor zur direkten Messung einer Position, einer Bewegungsstrecke und/oder der Bewegungsgeschwindigkeit eines Transformatorblechs an dem Transformatorblech auf. Bei einer Messung einer Bewegungsgeschwindigkeit des Transformatorblechs kann der Positionssensor beziehungsweise Wegsensor insbesondere so angeordnet sein, dass Ausnehmungen und Durchbrüche im Transformatorblech eine Messung soweit als möglich nicht beeinträchtigen. Beispielsweise kann der Positionssensor beziehungsweise Wegsensor an einer horizontalen Verschiebeeinrichtung oberhalb des Transformatorblechs beziehungsweise der Fördervorrichtung angeordnet sein, sodass auch eine außermittige Positionierung relativ bezogen auf die Fördervorrichtung beziehungsweise eine Bewegungsrichtung, möglich wird. Alternativ ist es möglich eine Mehrzahl von Sensoren vorzusehen, die quer zur Bewegungsrichtung oberhalb der Fördervorrichtung angeordnet sind. Auch kann ein Positionssensor vorgesehen sein, der einen Zulauf eines Transformatorblechs detektiert und an die Verarbeitungsvorrichtung signalisiert, derart, dass die Verarbeitungsvorrichtung einen Wegsensor entsprechend einer Lage des zulaufenden Transformatorblechs auf der Fördervorrichtung oberhalb des Transformatorblechs mittels einer horizontalen Verschiebeeinrichtung positioniert. Gleichzeitig kann auch eine Lage des Positionssensors von der Verarbeitungsvorrichtung bei einer Bildverarbeitung des Kombinationsbildes des Transformators berücksichtigt werden. Sofern ein Positionssensor beziehungsweise Wegsensor keinen ein Transformatorblech betreffenden Wert liefert, kann von der Verarbeitungsvorrichtung der Zeitpunkt bestimmt werden, an dem das Transformatorblech den jeweiligen Sensor passiert hat. Vorteilhaft ist es daher, wenn zumindest die Wegsensoren in der Bewegungsrichtung vor und nach der Erfassungsvorrichtung in einem Abstand angeordnet sind, der nicht größer ist als eine Länge eines Transformatorblechs, da dann stets sichergestellt werden kann, dass zumindest ein Wegsensor das Transformatorblech erfasst. Gleichwohl kann dann die Fördervorrichtung zumindest die doppelte Länge des zu messenden Transformatorblechs aufweisen.

Zu den vorteilhaften Wirkungen des erfindungsgemäßen Inspektionssystems wird auf die Vorteilsbeschreibung des erfindungsgemäßen Verfahrens verwiesen.

Die optische Erfassungsvorrichtung kann eine Zeilenkamera aufweisen, wobei ein Zeilenbild der Kontur eines Transformatorblechs mit der Zeilenkamera erfassbar sein kann. Unter einer Zeilenkamera wird eine Kamera mit einer einreihigen Anordnung von Zeilensensoren verstanden, wobei ein Zeilensensor einem Pixel entsprechen kann. Die Zeilenkamera kann aber auch drei parallele Reihen von Zeilensensoren aufweisen, die jeweils Farbsensoren für RGB-Grundfarben sind. Die Zeilenkamera kann ein Objektiv aufweisen oder auch eine Kontakt-Image-Sensor-Zeilenkamera mit Gradienten-Index-Linsen sein. Dabei kann die Zeilenkamera über eine gesamte Breite eines Transformatorblechs verlaufen beziehungsweise derart lang sein. Durch eine hohe Auflösung der Zeilenkamera, die vorzugsweise lotrecht bzw. orthogonal zu dem Transformatorblech ausgerichtet ist, kann auch eine Schnittgüte der Kontur von der Verarbeitungsvorrichtung mittels Bildverarbeitung erfasst und bewertet werden. Darüber hinaus ist im Vergleich zu einer Flächenkamera eine Datenmenge eines Zeilensensors wesentlich geringer, wodurch eine schnelle Verarbeitung der Bilder der Zeilenkamera zu dem Kombinationsbild in Echtzeit während eines Durchlaufs des Transformatorblechs ermöglicht werden kann. Weiter ist es möglich eine Zeilenkamera durch eine geeignete Anordnung mehrerer Zeilenkameras auszubilden, beispielsweise durch eine versetzte Anordnung von zwei Zeilenkameras, die abschnittsweise überlappen. Die Anordnung der Zeilenkameras kann dann bei einer Bildverarbeitung dadurch berücksichtigt werden, dass deren Teilbilder zu dem Kombinationsbild zusammengesetzt werden.

Die optische Erfassungsvorrichtung kann auch eine Projektionsvorrichtung aufweisen, wobei die Projektionsvorrichtung als eine Beleuchtungseinrichtung ausgebildet sein kann, mittels der Licht auf das Transformatorblech projizierbar ist. So kann unmittelbar an der optischen Erfassungsvorrichtung eine Lichtquelle vorhanden sein, um einen Kontrast an Kanten eines Transformatorblechs zu verbessern und so eine Erkennung einer Kontur zu erleichtern. Wird eine Zeilenkamera durch eine versetzte Anordnung mehrerer Zeilenkameras ausgebildet, kann die Projektionsvorrichtung ebenfalls entsprechend versetzte Lichtquellen aufweisen.

Die Fördervorrichtung kann aus einem Förderband, zwei Förderbändern oder Transportwagen ausgebildet sein. Die Fördervorrichtung kann demnach ein durchgehendes Förderband aufweisen, welches unterhalb der optischen Erfassungsvorrichtung durchgeführt ist. Weiter können zwei Förderbänder in einer Bewegungsrichtung vor und nach der optischen Erfassungsvorrichtung angeordnet sein. Alternativ kann die Fördervorrichtung mit Transportwagen ausgebildet sein, die ein oder mehrere Transformatorbleche aufnehmen und an der optischen Erfassungsvorrichtung vorbeiführen können. Ein Transformatorblech liegt dann ruhend auf einem Transportwagen auf, sodass kein Schlupf zwischen dem Transformatorblech und der Fördervorrichtung auftreten kann. Sofern die Fördervorrichtung ein Förderband aufweist, ist es vorteilhaft, wenn die Messvorrichtung einen Positionssensor und/oder Wegsensor zur direkten Messung einer Position, einer Bewegungsstrecke und/oder eine Fördergeschwindigkeit eines Förderbandes oder eines Transportwagens aufweist. Auch bei einem Einsatz von Transportwagen können Lagerabweichungen auftreten, sodass auch hier ein Einsatz von Positionssensoren beziehungsweise Wegsensoren vorteilhaft sein kann.

Insbesondere kann jeweils zumindest ein Positionssensor und/oder Wegsensor in der Bewegungsrichtung vor und nach der Erfassungsvorrichtung angeordnet sein. Ist die Fördervorrichtung so ausgebildet, dass diese durch die Erfassungsvorrichtung geteilt angeordnet ist, könnten sich beispielsweise aus unterschiedlichen Reibwerten von Förderbändern und einer unterschiedlichen Abnutzung Geschwindigkeitsdifferenzen ergeben, die dann mit dem jeweiligen Positionssensor bzw. Wegsensor erfasst werden können. Beispielsweise kann dann für ein Förderband vor der Erfassungsvorrichtung und für ein Förderband nach der Erfassungsvorrichtung jeweils ein Positionssensor beziehungsweise Wegsensor vorgesehen sein, der ein Einlaufen oder Auslaufen eines Transformatorblechs und auch dessen Geschwindigkeit detektieren kann. Bei Förderbändern ohne eine Innenverzahnung kann eine Bewegungsgeschwindigkeit des zu erfassenden Transformatorblechs sowohl vor als auch nach der Erfassungsvorrichtung erfasst werden.

Vorteilhaft kann das Förderband mit Magneten zur Erhöhung eines Reibungskoeffizienten des Förderbandes ausgebildet sein. So können in dem Förderband Magnete integriert sein oder unterhalb des Förderbands angeordnet sein, um den Reibungskoeffizienten des Transformatorblechs am Förderband zu erhöhen.

Das Förderband kann weiter mit einer Zahnung ausgebildet sein, die mit einem Antriebsrad des Förderbades in Eingriff stehen kann. Durch die Zahnung kann ein Schlupf zwischen dem Antriebsrad des Förderbandes und dem Förderband verhindert werden. Auch können mögliche Messfehler durch eine Bandlängung und Temperaturunterschiede mittels eines Sensors, der Zähne der Zahnung erfasst, berücksichtigt werden. Ein derartiger Sensor kann ein Encoder zur Erfassung von Zahnflanken an einer Innenseite des Förderbandes sein, mit dem dann auch eine Geschwindigkeit des Förderbandes vergleichsweise genau erfasst werden kann.

Das Förderband kann eine Zentriereinrichtung zur Ausrichtung von Transformatorblechen auf dem Förderband aufweisen. Ein einlaufendes Transformatorblech kann dann mittels der Zentriereinrichtung in etwa in Richtung einer Bewegungsrichtung ausgerichtet werden. Die Zentriereinrichtung kann aus Führungselementen ausgebildet sein, die einen möglichst parallel zu einer Bewegungsrichtung und orthogonal zur optischen Erfassungsvorrichtung ausgerichteten Blechlauf vorgeben. Nicht parallel in die optische Erfassungsvorrichtung einlaufende Transformatorbleche können durch in der Verarbeitungsvorrichtung vorgenommene Bildverarbeitung auf einen geraden Blechlauf umgerechnet werden.

In einer alternativen Ausführungsform können die Transportwagen jeweils mit Vakuumsaugern und/oder Magneten zur Halterung von Transformatorblechen ausgebildet sein, wobei die Transportwagen mittels eines Lineartriebs der Fördervorrichtung bewegbar sein können. An dem Lineartrieb, der auch umlaufend ausgebildet sein kann, können eine Anzahl Transportwagen bewegbar angeordnet sein, um Transformatorbleche unterhalb der optischen Erfassungsvorrichtung vorbeizuführen. Die Transformatorbleche können dann mittels der Vakuumsauger und/oder der Magnete oder auch trockener Adhäsion an den Transportwagen temporär fest fixiert werden. Die einzelnen Vakuumsauger oder Magnete können in Gruppen von mindestens zwei Stück fest an einem Transportwagen angeordnet sein. Ein Transportwagen kann elektrisch oder pneumatisch sowie mechanisch eine in einer Bewegungsrichtung gradlinige Bewegung ausführen. Eine Geschwindigkeit eines Transportwagens kann dann variabel passend zum erforderlichen Vorschub des zu vermessenden Transformatorblech eingestellt werden. Auch können Transportwagen so angeordnet und aufgebaut sein, dass sie nebeneinander parallel fahrend ausgebildet sind. Weiter kann eine Übergabe von einem Transportwagen zum nächsten Transportwagen während einer Fahrt der Transportwagen bzw. einer Förderbewegung erfolgen, ohne dass es zu einer Geschwindigkeitsänderung des geförderten Transformatorblechs kommt. Die Transportwagen können auch vor und zurück bewegt werden, wobei dann die Vakuumsauger und/oder Magnete die jeweiligen Transformatorbleche freigeben oder fixieren.

Weiter kann die Messvorrichtung einen Temperatursensor zur Erfassung einer Temperatur eines Transformatorblechs und/oder der Fördervorrichtung aufweisen, um beispielsweise eine Ist-Temperatur eines einlaufenden Transformatorblechs zu ermitteln und an die Verarbeitungsvorrichtung weiterzugeben.

Weitere vorteilhafte Ausführungsformen eines Inspektionssystems ergeben sich aus den Merkmalsbeschreibungen der auf den Verfahrensanspruch 1 rückbezogenen Unteransprüchen.

Nachfolgend werden bevorzugte Ausführungsformen der Erfindung unter Bezugnahme auf die beigefügten Zeichnungen näher erläutert.

Es zeigen:
- **Fig. 1**: Eine Draufsicht eines Transformatorblechs in einer ersten Ausführungsform;
- **Fig. 2**: eine Draufsicht eines Transformatorblechs in einer zweiten Ausführungsform;
- **Fig. 3**: eine Draufsicht eines Transformatorblechs in einer dritten Ausführungsform;
- **Fig. 4**: eine Draufsicht eines Transformatorblechs in einer vierten Ausführungsform;
- **Fig. 5**: eine Draufsicht eines Transformatorblechs in einer fünften Ausführungsform;
- **Fig. 6**: eine Detailansicht aus **Fig. 5****;**
- **Fig. 7**: eine Schnittansicht eines Inspektionssystems in einer ersten Ausführungsform entlang einer Linie VII-VII aus **Fig. 8****;**
- **Fig. 8**: eine Schnittansicht des Inspektionssystems entlang einer Linie VIII-VIII aus **Fig. 7****;**
- **Fig. 9**: eine Draufsicht des Inspektionssystems aus **Fig. 7****;**
- **Fig. 10a**: eine Schnittansicht eines Inspektionssystems in einer zweiten Ausführungsform in einem ersten Arbeitsschritt;
- **Fig. 10b**: das Inspektionssystem in einem zweiten Arbeitsschritt;
- **Fig. 10c**: das Inspektionssystem in einem dritten Arbeitsschritt;
- **Fig. 11**: eine Querschnittansicht eines Inspektionssystems in einer dritten Ausführungsform;
- **Fig. 12**: eine Schnittansicht eines Inspektionssystems in einer vierten Ausführungsform;
- **Fig. 13**: eine Schnittansicht eines Inspektionssystems in einer fünften Ausführungsform.

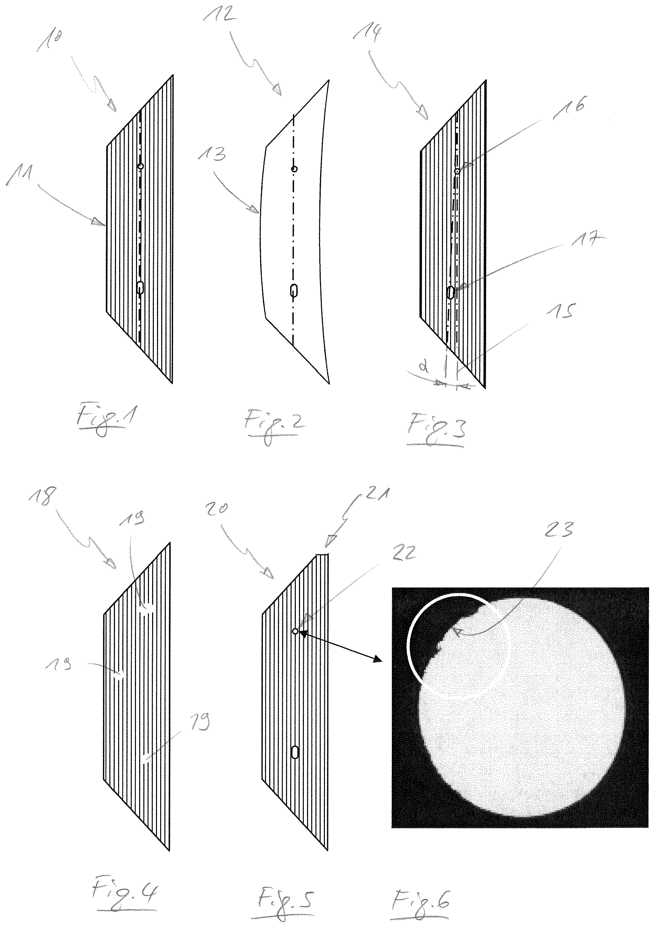

Die **Fig. 1** zeigt eine Draufsicht eines Transformatorblechs 10, dessen Gestalt im Wesentlichen durch eine äußere Kontur 11 und hier nicht näher angegebenem Maße bestimmt ist. Die Kontur 11 und die Maße sind bestimmend für eine Geometrie des Transformatorblechs 10.

Die **Fig. 2** zeigt ein Transformatorblech 12 mit einer säbelförmig geschnittenen Kontur 13.

Die **Fig. 3** zeigt ein Transformatorblech 14 mit einer Längsachse 15 und einer auf der Längsachse 15 liegenden Bohrung 16. Ein Langloch 17 ist hier um einen Winkel α relativ zur Längsachse 15 versetzt in dem Transformatorblech 14 ausgebildet.

Die **Fig. 4** zeigt ein Transformatorblech 18 mit in dem Transformatorblech 18 ausgebildeten ungleichmäßigen Durchbrüchen 19.

Die **Fig. 5** und **6** zeigen ein Transformatorblech 20 mit einem abgeschnittenen Ende 21 und einer Bohrung 22, deren innere Schnittkante 23 unsauber ausgeführt ist.

Die in den **Fig. 1** bis **6** dargestellten Transformatorbleche zeigen hier Eigenschaften, die bestimmend für eine Gestalt des jeweiligen Transformatorblechs sind und die mit einem der nachfolgend beschriebenen Inspektionssysteme bestimmt beziehungsweise gemessen werden können.

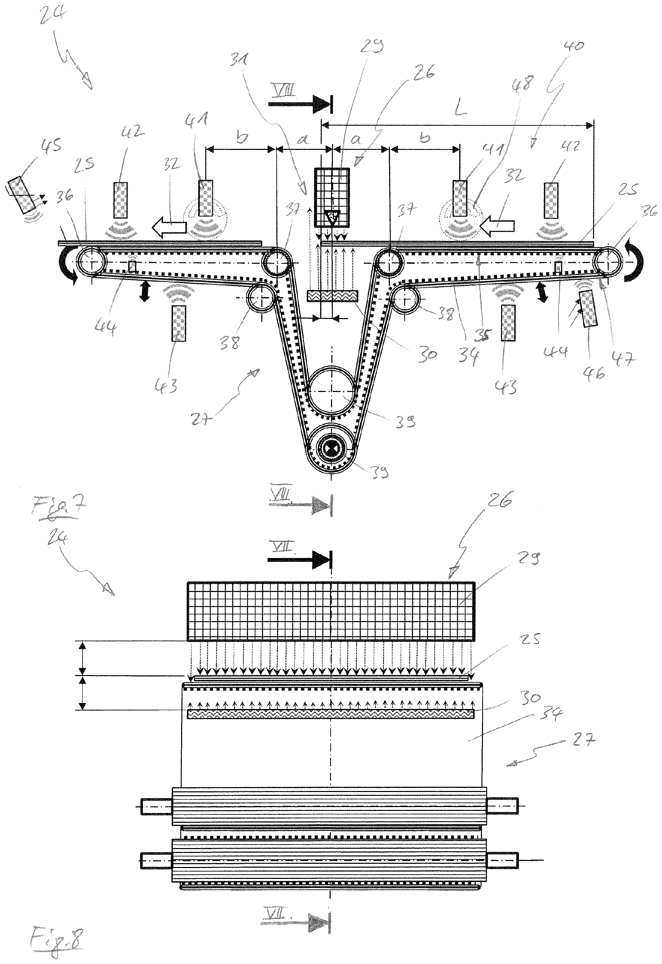

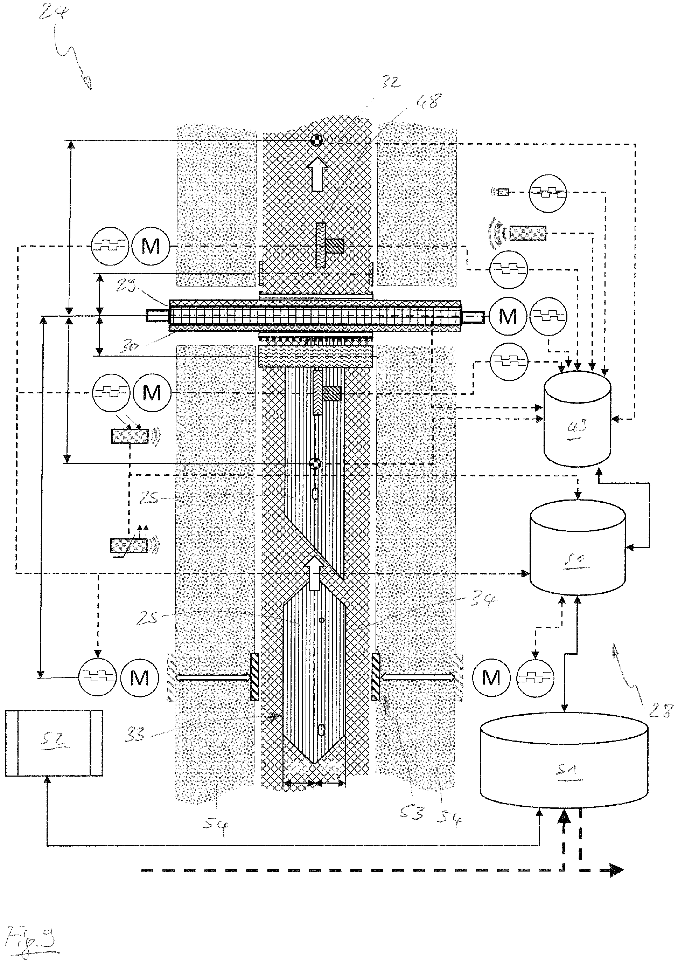

Eine Zusammenschau der **Fig. 7** bis **9** zeigt ein Inspektionssystem 24 zur Fehleranalyse von Transformatorblechen 25 mit einer Erfassungseinheit 26, einer Fördervorrichtung 27 und einer Verarbeitungsvorrichtung 28. Die Erfassungseinheit 26 ist aus einer Zeilenkamera 29 und einer Beleuchtungseinrichtung 30 ausgebildet, die zusammen eine optische Erfassungsvorrichtung 31 ausbilden. Insbesondere ist die optische Erfassungsvorrichtung 31 relativ quer bzw. orthogonal zu einer hier mit einem Pfeil 32 gekennzeichneten Bewegungsrichtung der Transformatorbleche 25 angeordnet. Von der Beleuchtungseinrichtung 30 emittiertes Licht fällt auf die Zeilenkamera 29, sodass eine Kontur 33 eines zwischen der Zeilenkamera 29 und der Beleuchtungseinrichtung 30 eingeschobenen Transformatorblechs 25 von der Zeilenkamera 29 durch Aufnahme eines Bildes erfasst werden kann. Eine Vielzahl von in Serie aufgenommener Bilder kann dann von der Verarbeitungsvorrichtung 28 zu einem Kombinationsbild des Transformatorblechs 25 zusammengesetzt werden, wobei aus dem Kombinationsbild eine Gestalt des Transformatorblechs 25 bestimmt beziehungsweise gemessen werden kann.

Die Fördervorrichtung 27 ist aus einem durchgehenden Förderband 34 ausgebildet, wobei das Förderband 34 mit einer Zahnung 35 ausgebildet ist, die in zumindest eines der Antriebsräder 36, 37, 38 und 39 eingreift. Weiter ist eine Messvorrichtung 40 der Erfassungseinheit 26 vorgesehen, mit der eine Bewegungsgeschwindigkeit eines Transformatorblechs 25 relativ zu der optischen Erfassungsvorrichtung 31 gemessen werden kann. Die Messvorrichtung 40 umfasst insbesondere zwei Wegsensoren 41 zur Messung einer Bewegungsstrecke eines Transformatorblechs 25. Weiter umfasst die Messvorrichtung 40 zwei Positionssensoren 42, die zur Erkennung eines Transformatorblechs 25 dienen. Mittels Sensoren 43 der Messvorrichtung 40 wird eine Bandspannung des Förderbandes 34 gemessen. Encoder 44 dienen zur Ermittlung einer Bewegungsgeschwindigkeit des Förderbandes 34 durch Zählung der Zahnung 35. Darüber hinaus umfasst die Messvorrichtung 40 Temperatursensoren 45 zur Messung einer Ist-Temperatur des Transformatorblechs 25. An dem Förderband 34 ist ein Sensor 46 zur Messung beziehungsweise Inspektion einer Oberfläche 47 des Förderbandes 34 vorgesehen.

Die optische Erfassungsvorrichtung 31 ist mittig zwischen den Antriebsrädern 37 in einem Relativabstand a angeordnet, wobei die Wegsensoren 41 ebenfalls in einem gleichgroßen Relativabstand b von den Antriebsrädern 37 angeordnet sind. Eine Gesamtlänge L des Transformatorblechs 25 ist nicht größer als die Längen 2a + 2b. Das Transformatorblech 25 wird so stets von einem der Wegsensoren 41 erfasst. Die Wegsensoren 41 können optische oder mechanische Sensoren sein, wobei dann die Wegsensoren 41 auch jeweils ein Rad 48, welches hier nur beispielhaft angedeutet ist, aufweisen können.

Die Verarbeitungsvorrichtung 28 umfasst hier eine Bildverarbeitungseinheit 49 und eine Messverarbeitungseinheit 50, welche an ein SPS-System 51 einer Anlage zur Erstellung von Transformatorkernen angeschlossen sein kann. An das SPS-System 51 kann weiter eine Datenbank 52 zur Verarbeitung von Werkstückdatensätzen der jeweiligen Transformatorbleche 25 gekoppelt sein.

Zur Anordnung der Transformatorbleche 25 auf dem Förderband 34 ist eine Zentriervorrichtung 53 ausgebildet, die an Gleitblechen 54 der Fördervorrichtung 27 positionierbar ist und einen im Wesentlichen geraden Einlauf der Transformatorbleche 25 in die optische Erfassungsvorrichtung 31 gewährleistet.

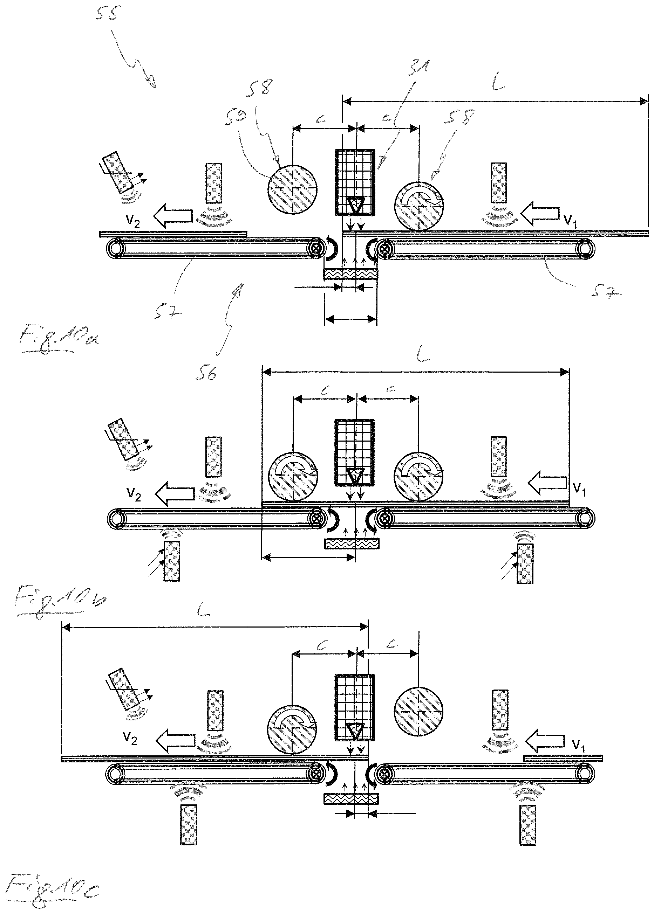

Eine Zusammenschau der Fig. **10a** bis **10c** zeigt ein Inspektionssystem 55, welches im Unterschied zum Inspektionssystem aus den **Fig. 7** bis **9** eine Fördervorrichtung 56 aufweist, die aus zwei voneinander getrennten Förderbändern 57 ausgebildet ist. Wegsensoren 58 sind hier mit einem Rad 59 relativ zu Transformatorblechen 25 bewegbar und in einem übereinstimmenden Abstand c relativ zu der optischen Erfassungsvorrichtung 31 so angeordnet, dass eine Bewegungsgeschwindigkeit v1 des einlaufenden Förderbandes 57 unabhängig von einer Bewegungsgeschwindigkeit v2 des auslaufenden Förderbandes 57 über einen Kontakt des Rades 59 mit dem Transformatorblech 25 gemessen werden kann.

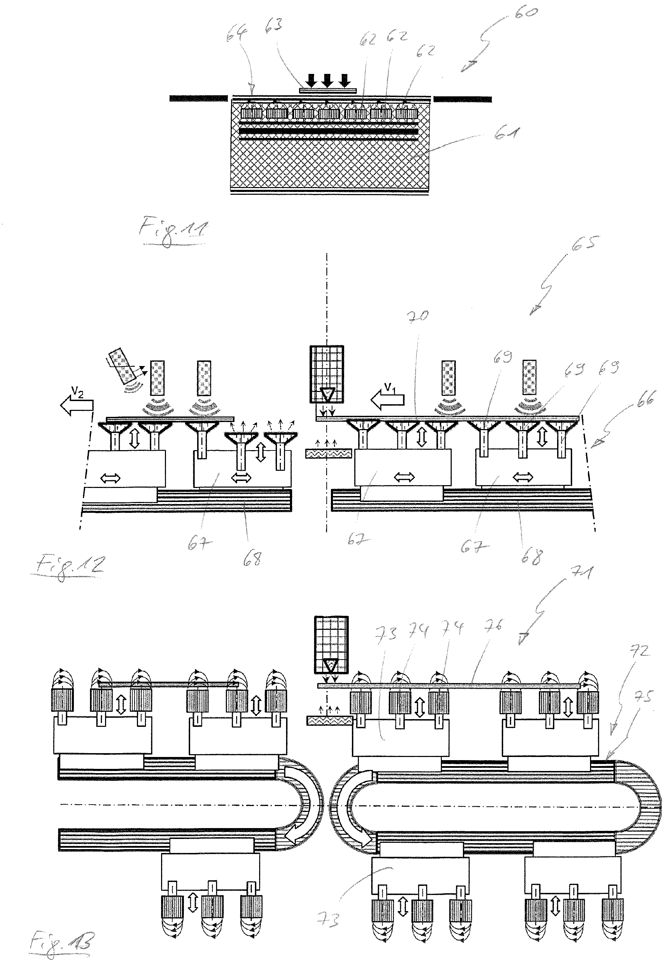

Die **Fig. 11** zeigt eine Querschnittansicht eines Inspektionssystems 60 mit einem Förderband 61 und darunter angeordneten Magneten 62, die aufgrund ihrer Magnetkraft ein Transformatorblech 63 an eine Oberfläche 64 des Förderbands 61 anpressen und so einen Schlupf mindern können.

Die **Fig. 12** zeigt ein Inspektionssystem 65 dessen Fördervorrichtung 66 Transportwagen 67 aufweist, die entlang eines Lineartriebs 68 bewegbar sind. An den Transportwagen 67 sind jeweils Vakuumsauger 69 angeordnet, mittels deren ein Transformatorblech 70 fixiert und gefördert werden kann. Dabei kann eine Übergabe eines Transformatorblechs 70 zwischen den Transportwagen 67 erfolgen.

Die **Fig. 13** zeigt ein Inspektionssystem 71 mit einer Fördervorrichtung 72, die aus Transportwagen 73 mit Magneten 74 ausgebildet ist. Die Transportwagen 73 können entlang eines umlaufenden Lineartriebs 75 bewegt werden, wobei die Magnete 74 zur Fixierung von Transformatorblechen 76 elektrisch ein- und ausgeschaltet werden können.

## Patentansprüche

1. Verfahren zur Fehleranalyse von Transformatorblechen mit einem Inspektionssystem (24, 55, 60, 65, 71), wobei das Inspektionssystem eine Erfassungseinheit (26), eine Fördervorrichtung (27, 56, 66, 72) und eine Verarbeitungsvorrichtung (28) umfasst, wobei die Erfassungseinheit eine optische Erfassungsvorrichtung (31) aufweist, wobei mittels der Fördervorrichtung eine Anzahl von Transformatorblechen (10, 12, 14, 18, 20, 25) relativ zu der Erfassungsvorrichtung ununterbrochen bewegt wird, wobei die Erfassungsvorrichtung quer, vorzugsweise orthogonal zu einer Bewegungsrichtung eines Transformatorblechs angeordnet wird,
**dadurch gekennzeichnet,**
**dass** mittels einer Messvorrichtung (40) der Erfassungseinheit eine Bewegungsgeschwindigkeit eines Transformatorblechs relativ zu der Erfassungsvorrichtung gemessen wird, wobei ein Bild einer Kontur (11, 13, 33) eines Transformatorblechs mit der Erfassungsvorrichtung erfasst wird, wobei mittels der Verarbeitungsvorrichtung Bilder eines Transformatorblechs unter Berücksichtigung der Bewegungsgeschwindigkeit des Transformatorblechs zu einem Kombinationsbild des Transformatorblechs zusammensetzt werden, wobei mittels der Verarbeitungsvorrichtung aus dem Kombinationsbild eine Gestalt des Transformatorblechs bestimmt wird, wobei mittels eines Positionssensors (42) und/oder Wegsensors (41) der Messvorrichtung eine direkte Messung einer Position, einer Bewegungsstrecke und/oder der Bewegungsgeschwindigkeit des Transformatorblechs an dem Transformatorblech erfolgt, wobei die Verarbeitungsvorrichtung zur Ausbildung eines Transformatorkerns eine Legereihenfolge für eine Anzahl von Transformatorblechen anhand deren Gestalt bestimmt.

2. Verfahren nach Anspruch 1,
**dadurch gekennzeichnet,**
**dass** ein Maß und/oder eine Kontur (11, 13, 33) des Transformatorblechs (10, 12, 14, 18, 20, 25) mittels Bildverarbeitung aus dem Kombinationsbild bestimmt werden.

3. Verfahren nach Anspruch 1 oder 2,
**dadurch gekennzeichnet,**
**dass** die Verarbeitungsvorrichtung (28) das erfasste Bild und eine zu einem Erfassungszeitpunkt mittels der Messvorrichtung (40) gemessene Position des Transformatorblechs (10, 12, 14, 18, 20, 25) in Bewegungsrichtung relativ zu der Erfassungsvorrichtung (31) einander zuordnet.

4. Verfahren nach Anspruch 3,
**dadurch gekennzeichnet,**
**dass** die Verarbeitungsvorrichtung (28) einen Bilddatensatz des Bildes und einem Messdatensatz der Position in einem Werkstückdatensatz des Transformatorblechs (10, 12, 14, 18, 20, 25) speichert.

5. Verfahren nach Anspruch 4,
**dadurch gekennzeichnet,**
**dass** die Verarbeitungsvorrichtung (28) dem Bilddatensatz des Bildes und dem Messdatensatz der Position einen übereinstimmenden Zeitstempel zuweist.

6. Verfahren nach Anspruch 4 oder 5,
**dadurch gekennzeichnet,**
**dass** die Verarbeitungsvorrichtung (28) aus dem Bilddatensatz des Bildes eine individuelle optische Kennzeichnung des Transformatorblechs (10, 12, 14, 18, 20, 25) erkennt und dem Werkstückdatensatz zuordnet.

7. Verfahren nach einem der vorangehenden Ansprüche,
**dadurch gekennzeichnet,**
**dass** die Verarbeitungsvorrichtung (28) Messdaten von einem Positionssensor (42) und/oder Wegsensor (41) in der Bewegungsrichtung vor und nachfolgend von einem Positionssensor und/oder Wegsensor in der Bewegungsrichtung nach der Erfassungsvorrichtung (31) verarbeitet.

8. Verfahren nach einem der vorangehenden Ansprüche,
**dadurch gekennzeichnet,**
**dass** eine Differenz einer an einem Ende (21) des Transformatorblechs (10, 12, 14, 18, 20, 25) gemessenen Bewegungsgeschwindigkeit zu einer an einem gegenüberliegenden Ende des Transformatorblechs gemessenen Bewegungsgeschwindigkeit bei der Bestimmung der Gestalt von der Verarbeitungsvorrichtung (28), bevorzugt mit einem Zeitpunkt eines Wechsels der Bewegungsgeschwindigkeit, berücksichtigt wird.

9. Verfahren nach einem der vorangehenden Ansprüche,
**dadurch gekennzeichnet,**
**dass** eine Temperatur des Transformatorblechs (10, 12, 14, 18, 20, 25) und/oder der Fördervorrichtung (27, 56, 66, 72) gemessen und mit einem jeweiligen Ausdehnungskoeffizienten bei der Bestimmung der Gestalt von der Verarbeitungsvorrichtung (28) berücksichtigt wird.

10. Verfahren nach einem der vorangehenden Ansprüche,
**dadurch gekennzeichnet,**
**dass** eine Bandspannung und/oder ein Reibwert eines Förderbandes (34, 57, 61) der Fördervorrichtung (27, 56, 66, 72) gemessen und bei der Bestimmung der Gestalt von der Verarbeitungsvorrichtung (28) berücksichtigt werden.

11. Verfahren nach einem der vorangehenden Ansprüche,
**dadurch gekennzeichnet,**
**dass** eine Kalibrierung des Inspektionssystems (24, 55, 60, 65, 71) mittels einer Inspektion eines Transformatorblechs (10, 12, 14, 18, 20, 25) mit einer bekannten Gestalt durchgeführt wird.

12. Inspektionssystem (24, 55, 60, 65, 71) zur Fehleranalyse von Transformatorblechen, wobei das Inspektionssystem eine Erfassungseinheit (26), eine Fördervorrichtung (27, 56, 66, 72) und eine Verarbeitungsvorrichtung (28) umfasst, wobei die Erfassungseinheit eine optische Erfassungsvorrichtung (31) aufweist, wobei mittels der Fördervorrichtung eine Anzahl von Transformatorblechen relativ zu der Erfassungsvorrichtung ununterbrochen bewegbar ist, wobei die Erfassungsvorrichtung quer, vorzugsweise orthogonal zu einer Bewegungsrichtung eines Transformatorblechs angeordnet ist, wobei
die Erfassungseinheit eine Messvorrichtung (40) aufweist, mittels der eine Bewegungsgeschwindigkeit eines Transformatorblechs relativ zu der Erfassungsvorrichtung messbar ist, wobei ein Bild einer Kontur eines Transformatorblechs mit der Erfassungsvorrichtung erfassbar ist, wobei mittels der Verarbeitungsvorrichtung Bilder eines Transformatorblechs unter Berücksichtigung der Bewegungsgeschwindigkeit des Transformatorblechs zu einem Kombinationsbild des Transformatorblechs zusammensetzbar sind, wobei mittels der Verarbeitungsvorrichtung eine Gestalt des Transformatorblechs aus dem Kombinationsbild bestimmbar ist, wobei die Messvorrichtung einen Positionssensor (42) und/oder Wegsensor (41) zur direkten Messung einer Position, einer Bewegungsstrecke und/oder der Bewegungsgeschwindigkeit eines Transformatorblechs an dem Transformatorblech aufweist, **dadurch gekennzeichnet, dass** mittels der Verarbeitungsvorrichtung zur Ausbildung eines Transformatorkerns eine Legereihenfolge für eine Anzahl von Transformatorblechen anhand deren Gestalt bestimmbar ist.

13. Inspektionssystem nach Anspruch 12,
**dadurch gekennzeichnet,**
**dass** die optische Erfassungsvorrichtung (31) eine Zeilenkamera (29) aufweist, wobei ein Zeilenbild der Kontur (11, 13, 33) eines Transformatorblechs (10, 12, 14, 18, 20, 25) mit der Zeilenkamera erfassbar ist.

14. Inspektionssystem nach Anspruch 12 oder 13,
**dadurch gekennzeichnet,**
**dass** die optische Erfassungsvorrichtung (31) eine Projektionsvorrichtung aufweist, wobei die Projektionseinrichtung als eine Beleuchtungseinrichtung (30) ausgebildet ist, mittels der Licht auf das Transformatorblech (10, 12, 14, 18, 20, 25) projizierbar ist.

15. Inspektionssystem nach einem der Ansprüche 12 bis 14,
**dadurch gekennzeichnet,**
**dass** die Fördervorrichtung (27, 56, 66, 72) aus einem Förderband (34) oder zwei Förderbändern (57, 61) ausgebildet ist.

16. Inspektionssystem nach Anspruch 15,
**dadurch gekennzeichnet,**
**dass** das Förderband (34, 57, 61) mit Magneten (62) zur Erhöhung eines Reibwertes des Förderbandes ausgebildet ist.

17. Inspektionssystem nach Anspruch 15 oder 16,
**dadurch gekennzeichnet,**
**dass** das Förderband (34, 57, 61) mit einer Zahnung (35) ausgebildet ist, die mit einem Antriebsrad (36, 37, 38, 39) des Förderbandes in Eingriff steht.

18. Inspektionssystem nach einem der Ansprüche 15 bis 17,
**dadurch gekennzeichnet,**
**dass** das Förderband (34, 57, 61) eine Zentriereinrichtung (53) zur Ausrichtung von Transformatorblechen (10, 12, 14, 18, 20, 25) auf dem Förderband aufweist.

19. Inspektionssystem nach einem der Ansprüche 15 bis 18,
**dadurch gekennzeichnet,**
**dass** die Messvorrichtung (40) einen Positionssensor (42) und/oder Wegsensor (41) zur direkten Messung einer Position, einer Bewegungsstrecke und/oder einer Fördergeschwindigkeit eines Förderbandes (34, 57, 61) aufweist.

20. Inspektionssystem nach einem der Ansprüche 15 bis 18,
**dadurch gekennzeichnet,**
**dass** die Messvorrichtung (40) Positionssensoren (42) und/oder Wegsensoren (41) zur direkten Messung einer Position, einer Bewegungsstrecke und/oder einer Fördergeschwindigkeit eines Förderbandes (34, 57, 61) aufweist, wobei jeweils zumindest ein Positionssensor und/oder Wegsensor in der Bewegungsrichtung vor und nach der Erfassungsvorrichtung (31) angeordnet ist.

21. Inspektionssystem nach einem der Ansprüche 12 bis 14,
**dadurch gekennzeichnet,**
**dass** die Fördervorrichtung (27, 56, 66, 72) aus Transportwagen (67, 73) ausgebildet ist.

22. Inspektionssystem nach Anspruch 21,
**dadurch gekennzeichnet,**
**dass** die Transportwagen (67, 73) jeweils mit Vakuumsaugern (69) und/oder Magneten (62, 74) zur Halterung von Transformatorblechen ausgebildet sind, wobei die Transportwagen mittels eines Lineartriebs (68, 75) der Fördervorrichtung (66, 72) bewegbar sind.

23. Inspektionssystem nach Anspruch 21 oder 22,
**dadurch gekennzeichnet,**
**dass** die Messvorrichtung (40) einen Positionssensor (42) und/oder Wegsensor (41) zur direkten Messung einer Position, einer Bewegungsstrecke und/oder einer Fördergeschwindigkeit eines Transportwagens (67, 73) aufweist.

24. Inspektionssystem nach Anspruch 21 oder 22,
**dadurch gekennzeichnet,**
**dass** die Messvorrichtung (40) Positionssensoren (42) und/oder Wegsensoren (41) zur direkten Messung einer Position, einer Bewegungsstrecke und/oder einer Fördergeschwindigkeit eines Transportwagens (67, 73) aufweist, wobei jeweils zumindest ein Positionssensor und/oder Wegsensor in der Bewegungsrichtung vor und nach der Erfassungsvorrichtung (31) angeordnet ist.

25. Inspektionssystem nach einem der Ansprüche 12 bis 24,
**dadurch gekennzeichnet,**
**dass** die Messvorrichtung (40) einen Temperatursensor (45) zur Erfassung einer Temperatur eines Transformatorblechs (10, 12, 14, 18, 20, 25) und/oder der Fördervorrichtung (27, 56, 66, 72) aufweist.

## Claims

1. A method for analysing defects in transformer laminations with an inspection system (24, 55, 60, 65, 71), wherein the inspection system comprises a detection unit (26), a conveyance device (27, 56, 66, 72) and a processing device (28), wherein the detection unit includes an optical detecting device (31), wherein the conveyance device is used to continuously transport a plurality of transformer laminations (10, 12, 14, 18, 20, 25) relative to the detecting device, wherein the detecting device is arranged transversely, preferably orthogonally, to a direction of movement of a transformer lamination,
**characterized in that**
a velocity of movement of a transformer lamination relative to the detecting device is measured via a measurement device (40) of the detection unit, wherein an image of a contour (11, 13, 33) of a transformer lamination is captured with the detecting device, wherein images of a transformer lamination are assembled into a combined image of the transformer lamination via the processing device while considering the velocity of movement of the transformer lamination, wherein a shape of the transformer lamination is determined on the basis of the combined image via the processing device, wherein a position sensor (42) and/or a distance sensor (41) of the measurement device is used to measure a position, a distance of completed movement and/or the velocity of movement of the transformer lamination directly at the transformer lamination, wherein the processing device determines a placement sequence for a plurality of transformer laminations for producing a transformer core on the basis of the shape of the transformer laminations.

2. The method according to Claim 1,
**characterized in that**
a dimension and/or a contour (11, 13, 33) of the transformer lamination (10, 12, 14, 18, 20, 25) is/are determined on the basis of the combined image by means of image processing.

3. The method according to Claim 1 or 2,
**characterized in that**
the processing device (28) associates the captured image with a position of the transformer lamination (10, 12, 14, 18, 20, 25) measured by the measurement device (40) in the direction of movement relative to the detecting device (31) at the capture time.

4. The method according to Claim 3,
**characterized in that**
the processing device (28) stores an image data set of the image and a measurement data set of the position in a component data set of the transformer lamination (10, 12, 14, 18, 20, 25).

5. The method according to Claim 4,
**characterized in that**
the processing device (28) allocates a consistent time stamp to the image data set of the image and the measurement data set of the position.

6. The method according to Claim 4 or 5,
**characterized in that**
the processing device (28) detects an individual optical marker of the transformer lamination (10, 12, 14, 18, 20, 25) within the image data set of the image and assigns the same to the component data set.

7. The method according to one of the preceding claims,
**characterized in that**
the processing device (28) processes measurement data from a position sensor (42) and/or distance sensor (41) placed before the detecting device (31) in the direction of movement and subsequently from a position sensor and/or distance sensor placed after the detecting device in the direction of movement.

8. The method according to one of the preceding claims,
**characterized in that**
a difference between a velocity of movement measured at one end (21) of the transformer lamination (10, 12, 14, 18, 20, 25) and a velocity of movement measured at an opposite end of the transformer lamination is considered by the processing device (28) in the determination of the shape, preferably while also considering the time of a change of the velocity of movement.

9. The method according to one of the preceding claims,
**characterized in that**
a temperature of the transformer lamination (10, 12, 14, 18, 20, 25) and/or the conveyance device (27, 56, 66, 72) is measured and considered along with a respective expansion coefficient for the determination of the shape by the processing device (28).

10. The method according to one of the preceding claims,
**characterized in that**
a belt tension and/or a friction coefficient of a conveyor belt (34, 57, 61) of the conveyance device (27, 56, 66, 72) is measured and considered for the determination of the shape by the processing device (28).

11. The method according to one of the preceding claims,
**characterized in that**
a calibration of the inspection system (24, 55, 60, 65, 71) is conducted via an inspection of a transformer lamination (10, 12, 14, 18, 20, 25) with a known shape.

12. An inspection system (24, 55, 60, 65, 71) for analysing defects in transformer laminations, wherein the inspection system comprises a detection unit (26), a conveyance device (27, 56, 66, 72) and a processing device (28), wherein the detection unit includes an optical detecting device (31), wherein the conveyance device is used to continuously transport a plurality of transformer laminations relative to the detecting device, wherein the detecting device is arranged transversely, preferably orthogonally, to a direction of movement of a transformer lamination, wherein the detection unit has a measurement device (40) which is used to measure a velocity of movement of a transformer lamination relative to the detecting device, wherein an image of a contour of a transformer lamination is captured with the detecting device, wherein images of a transformer lamination are assembled into a combined image of the transformer lamination via the processing device while considering the velocity of movement of the transformer lamination, wherein a shape of the transformer lamination is determined on the basis of the combined image via the processing device, wherein the measurement device includes a position sensor (42) and/or a distance sensor (41) to measure a position, a distance of completed movement and/or the velocity of movement of a transformer lamination directly at the transformer lamination,
**characterized in that**
a placement sequence for a plurality of transformer laminations for producing a transformer core is determined via the processing device on the basis of the shape of the transformer laminations.

13. The inspection system according to Claim 12,
**characterized in that**
the optical detecting device (31) includes a line scan camera (29), wherein a line scan image of the contour (11, 13, 33) of a transformer lamination (10, 12, 14, 18, 20, 25) can be captured with the line scan camera.

14. The inspection system according to Claim 12 or 13,
**characterized in that**
the optical detecting device (31) includes a projection device, wherein the projection device is designed as a lighting device (30), which can be used to project light onto the transformer lamination (10, 12, 14, 18, 20, 25).

15. The inspection system according to one of Claims 12 to 14,
**characterized in that**
the conveyance device (27, 56, 66, 72) is designed with one conveyor belt (34) or two conveyor belts (57, 61).

16. The inspection system according to Claim 15,
**characterized in that**
the conveyor belt (34, 57, 61) is designed with magnets (62) for increasing the friction coefficient of the conveyor belt.

17. The inspection system according to Claim 15 or 16,
**characterized in that**
the conveyor belt (34, 57, 61) is designed with a gearing (35), which engages with a drive wheel (36, 37, 38, 39) of the conveyor belt.

18. The inspection system according to one of Claims 15 to 17,
**characterized in that**
the conveyor belt (34, 57, 61) includes a centring device (53) for aligning transformer laminations (10, 12, 14, 18, 20, 25) on the conveyor belt.

19. The inspection system according to one of Claims 15 to 18,
**characterized in that**
the measurement device (40) includes a position sensor (42) and/or a distance sensor (41) to directly measure a position, a distance of completed movement and/or a transport velocity of a conveyor belt (34, 57, 61).

20. The inspection system according to one of Claims 15 to 18,
**characterized in that**
the measurement device (40) includes position sensors (42) and/or distance sensors (41) to directly measure a position, a distance of completed movement and/or a transport velocity of a conveyor belt (34, 57, 61), wherein at least one position sensor and/or distance sensor is arranged before and after the detecting device (31) in the direction of movement.

21. The inspection system according to one of Claims 12 to 14,
**characterized in that**
the conveyance device (27, 56, 66, 72) is designed with transport trolleys (67, 73).

22. The inspection system according to Claim 21,
**characterized in that**
the transport trolleys (67, 73) are each designed with vacuum cups (69) and/or magnets (62, 74) for holding transformer laminations, wherein the transport trolleys can be moveable via a linear drive (68, 75) of the conveyance device (66, 72).

23. The inspection system according to Claim 21 or 22,
**characterized in that**
the measurement device (40) includes a position sensor (42) and/or a distance sensor (41) to directly measure a position, a distance of completed movement and/or a transport velocity of a transport trolley (67, 73).

24. The inspection system according to Claim 21 or 22,
**characterized in that**
the measurement device (40) includes position sensors (42) and/or distance sensors (41) to directly measure a position, a distance of completed movement and/or a transport velocity of a transport trolley (67, 73), wherein at least one position sensor and/or distance sensor is arranged before and after the detecting device (31) in the direction of movement.

25. The inspection system according to one of Claims 12 to 24,
**characterized in that**
the measurement device (40) includes a temperature sensor (45) for detecting a temperature of a transformer lamination (10, 12, 14, 18, 20, 25) and/or the conveyance device (27, 56, 66, 72).

## Revendications

1. Procédé d'analyse de défauts de tôles de transformateur au moyen d'un système d'inspection (24, 55, 60, 65, 71), le système d'inspection comprenant une unité de détection (26), un dispositif de transport (27, 56, 66, 72) et un dispositif de traitement (28), l'unité de détection ayant un dispositif de détection (31) optique, le dispositif de transport étant utilisé pour transporter continûment une pluralité de tôles de transformateur (10, 12, 14, 18, 20, 25) par rapport au dispositif de détection, le dispositif de détection étant disposé transversalement, de préférence orthogonalement, à une direction de déplacement d'une tôle de transformateur,
**caractérisé en ce**
**qu'**une vitesse de déplacement d'une tôle de transformateur par rapport au dispositif de détection est mesurée par un dispositif de mesure (40) de l'unité de détection, une image d'un contour (11, 13, 33) d'une tôle de transformateur étant capturée par le dispositif de détection, des images d'une tôle de transformateur étant assemblées pour former une image combinée de la tôle de transformateur par le dispositif de traitement en tenant compte de la vitesse de déplacement de la tôle de transformateur, une forme de la tôle de transformateur étant déterminée sur la base de l'image combinée par le dispositif de traitement, une position, une distance de déplacement et/ou la vitesse de déplacement de la tôle de transformateur étant mesurée(s) directement sur la tôle de transformateur par un capteur de position (42) et/ou un capteur de distance (41) du dispositif de mesure, le dispositif de traitement déterminant une séquence de pose pour une pluralité de tôles de transformateur sur la base de la forme des tôles de transformateur pour la production d'un noyau de transformateur.

2. Procédé selon la revendication 1,
**caractérisé en ce**
**qu'**une dimension et/ou un contour (11, 13, 33) de la tôle de transformateur (10, 12, 14, 18, 20, 25) est/sont déterminé(s) sur la base de l'image combinée par traitement d'image.

3. Procédé selon la revendication 1 ou 2,
**caractérisé en ce que**
le dispositif de traitement (28) attribue l'image capturée à une position de la tôle de transformateur (10, 12, 14, 18, 20, 25) mesurée par le dispositif de mesure (40) dans la direction de déplacement par rapport au dispositif de détection (31) au moment de la capture.

4. Procédé selon la revendication 3,
**caractérisé en ce que**
le dispositif de traitement (28) enregistre un jeu de données d'image de l'image et un jeu de données de mesure de la position dans un jeu de données de composant de la tôle de transformateur (10, 12, 14, 18, 20, 25).

5. Procédé selon la revendication 4,
**caractérisé en ce que**
le dispositif de traitement (28) attribue une estampille temporelle concordante au jeu de données d'image de l'image et au jeu de données de mesure de la position.

6. Procédé selon la revendication 4 ou 5,
**caractérisé en ce que**
le dispositif de traitement (28) détecte une marque optique individuelle de la tôle de transformateur (10, 12, 14, 18, 20, 25) dans le jeu de données de l'image et l'attribue au jeu de données de composant.

7. Procédé selon l'une quelconque des revendications précédentes,
**caractérisé en ce que**
le dispositif de traitement (28) traite des données de mesure d'un capteur de position (42) et/ou d'un capteur de distance (41) en amont et en aval d'un capteur de position et/ou d'un capteur de distance dans la direction de déplacement an aval du dispositif de détection (31).

8. Procédé selon l'une quelconque des revendications précédentes,
**caractérisé en ce**
**qu'**une différence entre une vitesse de déplacement mesurée à une extrémité (21) de la tôle de transformateur (10, 12, 14, 18, 20, 25) et une vitesse de déplacement mesurée à une extrémité opposée de la tôle de transformateur est prise en compte par le dispositif de traitement (28) dans la détermination de la forme, de préférence avec un moment d'un changement de la vitesse de déplacement.

9. Procédé selon l'une quelconque des revendications précédentes,
**caractérisé en ce**
**qu'**une température de la tôle de transformateur (10, 12, 14, 18, 20, 25) et/ou du dispositif de transport (27, 56, 66, 72) est mesurée et prise en compte avec un coefficient de dilatation respectif par le dispositif de traitement (28) dans la détermination de la forme.

10. Procédé selon l'une quelconque des revendications précédentes,
**caractérisé en ce**
**qu'**une tension de bande et/ou un coefficient de friction d'une bande transporteuse (34, 57, 61) du dispositif de transport (27, 56, 66, 72) est mesuré et pris en compte par le dispositif de traitement (28) dans la détermination de la forme.

11. Procédé selon l'une quelconque des revendications précédentes,
**caractérisé en ce que**
le système d'inspection (24, 55, 60, 65, 71) est calibré au moyen d'une inspection d'une tôle de transformateur (10, 12, 14, 18, 20, 25) ayant un forme connue.

12. Système d'inspection (24, 55, 60, 65, 71) pour analyser des défauts de tôles de transformateur, le système d'inspection comprenant une unité de détection (26), un dispositif de transport (27, 56, 66, 72) et un dispositif de traitement (28), l'unité de détection ayant un dispositif de détection (31) optique, le dispositif de transport étant configuré pour transporter continûment une pluralité de tôles de transformateur par rapport au dispositif de détection, le dispositif de détection étant disposé transversalement, de préférence orthogonalement, à une direction de déplacement d'une tôle de transformateur, l'unité de détection ayant un dispositif de mesure (40) configuré pour mesurer une vitesse de déplacement d'une tôle de transformateur par rapport au dispositif de détection, le dispositif de détection étant configuré pour capturer une image d'un contour d'une tôle de transformateur, le dispositif de traitement étant configuré pour assembler des images d'une tôle de transformateur pour former une image combinée de la tôle de transformateur en tenant compte de la vitesse de déplacement de la tôle de transformateur, le dispositif de traitement étant configuré pour déterminer une forme de la tôle de transformateur sur la base de l'image combinée, le dispositif de mesure ayant un capteur de position (42) et/ou un capteur de distance (41) pour mesurer directement une position, une distance de déplacement et/ou la vitesse de déplacement d'une tôle de transformateur sur le tôle de transformateur,
**caractérisé en ce que**
le dispositif de traitement est configuré pour déterminer une séquence de pose pour une pluralité de tôles de transformateur sur la base de la forme des tôles de transformateur pour produire un noyau de transformateur.

13. Système d'inspection selon la revendication 12,
**caractérisé en ce que**
le dispositif de détection (31) optique a une caméra linéaire (29), la caméra linéaire étant configuré pour capturer une image linéaire du contour (11, 13, 33) d'une tôle de transformateur (10, 12, 14, 18, 20, 25).

14. Système d'inspection selon la revendication 12 ou 13,
**caractérisé en ce que**
le dispositif de détection (31) optique a un dispositif de projection, le dispositif de projection étant configuré comme dispositif d'éclairage (30) configuré pour projeter de la lumière sur la tôle de transformateur (10, 12, 14, 18, 20, 25).

15. Système d'inspection selon l'une quelconque des revendications 12 à 14,
**caractérisé en ce que**
le dispositif de transport (27, 56, 66, 72) se compose d'une bande transporteuse (34) ou de deux bandes transporteuses (57, 61).

16. Système d'inspection selon la revendication 15,
**caractérisé en ce que**
la bande transporteuse (34, 57, 61) est munie d'aimants (62) pour augmenter le coefficient de friction de la bande transporteuse.

17. Système d'inspection selon la revendication 15 ou 16,
**caractérisé en ce que**
la bande transporteuse (34, 57, 61) est munie d'une denture (35) qui est en prise avec une roue d'entraînement (36, 37, 38, 39) de la bande transporteuse.

18. Système d'inspection selon l'une quelconque des revendications 15 à 17,
**caractérisé en ce que**
la bande transporteuse (34, 57, 61) a un élément de centrage (53) pour aligner des tôles de transformateur (10, 12, 14, 18, 20, 25) sur la bande transporteuse.

19. Système d'inspection selon l'une quelconque des revendications 15 à 18,
**caractérisé en ce que**
le dispositif de mesure (40) a un capteur de position (42) et/ou un capteur de distance (41) pour mesurer directement une position, une distance de déplacement et/ou un vitesse de transport d'une bande transporteuse (34, 57, 61).

20. Système d'inspection selon l'une quelconque des revendications 15 à 18,
**caractérisé en ce que**
le dispositif de mesure (40) a des capteurs de position (42) et/ou des capteurs de distance (41) pour mesurer directement une position, une distance de déplacement et/ou une vitesse de transport d'une bande transporteuse (34, 57, 61), au moins un capteur de position et/ou un capteur de distance étant disposé en amont et en aval du dispositif de détection (31) dans la direction de déplacement.

21. Système d'inspection selon l'une quelconque des revendications 12 à 14,
**caractérisé en ce que**
le dispositif de transport (27, 56, 66, 72) se compose de chariots transporteurs (67, 73).

22. Système d'inspection selon la revendication 21,
**caractérisé en ce que**
les chariots transporteurs (67, 73) sont munis chacun de ventouses (69) et/ou d'aimants (62, 74) pour supporter des tôles de transformateur, les chariots transporteurs étant déplaçables par un entraînement linéaire (68, 75) du dispositif de transport (66, 72).

23. Système d'inspection selon la revendication 21 ou 22,
**caractérisé en ce que**
le dispositif de mesure (40) a un capteur de position (42) et/ou un capteur de distance (41) pour mesurer directement une position, une distance de déplacement et/ou une vitesse de transport d'un chariot transporteur (67, 73).

24. Système d'inspection selon la revendication 21 ou 22,
**caractérisé en ce que**
le dispositif de mesure (40) a des capteurs de position (42) et/ou des capteurs de distance (41) pour mesurer directement une position, une distance de déplacement et/ou une vitesse de transport d'un chariot transporteur (67, 73), au moins un capteur de position et/ou un capteur de distance étant disposé en amont et en aval du dispositif de détection (31) dans la direction de déplacement.

25. Système d'inspection selon l'une quelconque des revendications 12 à 24,
**caractérisé en ce que**
le dispositif de mesure (40) a un capteur de température (45) pour détecter une température d'une tôle de transformateur (10, 12, 14, 18, 20, 25) et/ou du dispositif de transport (27, 56, 66, 72).
